Europäisches Patentamt

European Patent Office

Office européen des brevets

(11) Veröffentlichungsnummer: **0 191 417**
**B1**

(12) **EUROPÄISCHE PATENTSCHRIFT**

(45) Veröffentlichungstag der Patentschrift: 06.02.91

(51) Int. Cl.⁵: **A 01 C 17/00**

(21) Anmeldenummer: **86101534.5**

(22) Anmeldetag: **06.02.86**

(60) Teilanmeldung 89103665.9 eingereicht am 06/02/86.

(54) Schleuderstreuer, insbesondere für gekörnte Düngemittel.

(30) Priorität: 06.02.85 DE 3503907
18.09.85 DE 3533217
16.11.85 DE 3540784

(43) Veröffentlichungstag der Anmeldung:
20.08.86 Patentblatt 86/34

(45) Bekanntmachung des Hinweises auf die
Patenterteilung:
06.02.91 Patentblatt 91/06

(84) Benannte Vertragsstaaten:
AT BE CH DE FR GB IT LI LU NL SE

(56) Entgegenhaltungen:
EP-A-0 088 480
FR-A-1 301 074
FR-A-2 234 603
FR-A-2 496 390
GB-A-1 600 407
GB-A-2 019 705

(73) Patentinhaber: Amazonen-Werke H. Dreyer
GmbH & Co. KG
Postfach 51
D-4507 Hasbergen-Gaste (DE)

(72) Erfinder: Dreyer, Heinz, Dipl.-Ing. Univ. Dr.
Am Amazonenwerk 7
D-4507 Hasbergen (DE)
Erfinder: Wiese, Walter
Roter Berg 18
D-4507 Hasbergen (DE)
Erfinder: Lührmann, Johannes
Bergstrasse 14
D-4512 Wallenhorst 1 (DE)

(74) Vertreter: Patentanwälte Grünecker, Kinkeldey,
Stockmair & Partner
Maximilianstrasse 58
D-8000 München 22 (DE)

Courier Press, Leamington Spa, England.

**Beschreibung**

Die Erfindung betrifft einen Schleuderstreuer, insbesondere für gekörnte Düngemittel, gemäß dem Oberbegriff des Patentanspruches 1.

Ein derartiger Schleuderstreuer ist durch die DE—PS 28 18 816 bekannt. Er hat sich in der landwirtschaftlichen Praxis bewährt und weist zwei angetriebene Verteilorgane, die als Schleuderscheiben ausgebildet sind, auf. Oberhalb dieser Verteilorgane ist der Schieber angeordnet, der die jeweilige Auslauföffnung mit verschieden großen Öffnungsweiten freigibt. Nachteilig ist bei diesem bekannten Schleuderstreuer, daß die beiden Schieber, von denen jeder einer Schleuderscheibe zugeordnet ist, jeweils nur gemeinsam betätigt werden können, so daß entweder beide Schleuderscheiben den Dünger verteilen oder nicht verteilen. Es ist nicht möglich, nur einen Schieber zu öffnen, so daß nur eine Schleuderscheibe die Düngemittel über die halbe Arbeitsbreite verteilt. Ein weiterer Nachteil besteht darin, daß die mit Hilfe der Schieber eingestellte Ausbringmenge während des Streuvorganges nicht verändert werden kann, so daß immer die der Schieberstellung entsprechende konstante Düngermenge ausgebracht wird. Zur besseren Anpassung an die jeweiligen Einsatzverhältnisse ist es jedoch notwendig, die Ausbringmenge während des Streuvorganges variieren zu können. Falls bei diesem Streuer die Streumenge während der Streuarbeit geändert werden muß, so muß der Landwirt jeweils die Arbeit unterbrechen und die Streumenge neu einstellen. Hierzu muß der Landwirt jeweils vom Schlepper absteigen. Diese ist sehr unbefriedigend.

Durch die FR—A—22 34 603 ist eine Fernbedienungsvorrichtung zum Verstellen eines Schiebers eines Schleuderstreuers bekannt. Diese Fernbedienungsvorrichtung umfaßt einen Betätigungshebel und mehrere diesem zugeordnete Markierungs- und Anschlagelemente zur Festlegung der Schließstellung, der maximalen Öffnungsstellung sowie einiger Zwischenstellungen des Schiebers.

Der Erfindung liegt die Aufgabe zugrunde, einen Schleuderstreuer der eingangs genannten Art mit einer einfachen und robusten Einstellmöglichkeit für verschiedene Ausbringmengen zu schaffen, die sich durch wiederholbar große Genauigkeit sowie hohe Anpassungsfähigkeit an unterschiedlichste Einsatzbedingungen auszeichnet.

Diese Aufgabe wird erfindungsgemäß durch das Kennzeichen des Anspruchs 1 gelöst.

Die Verstellung der beiden Schieberanordnungen unabhängig voneinander ermöglicht es, mit beiden Verteilorganen unterschiedliche Streumengen auszubringen und auf diese Weise den Schleuderstreuer in seitlicher Richtung, d.h. quer zur Fahrtrichtung, an unterschiedliche Einsatzbedingungen anzupassen. Beispielsweise ist es beim Einsatz des Schleuderstreuers am Hang sehr wichtig, auf der hangaufwärtigen Seite mehr Material als auf der hangabwärtigen Seite auszubringen. Die vom Schleppersitz aus betätigbaren Fernbedienungsvorrichtungen ermöglichen ohne Fahrtunterbrechung eine sehr einfache und schnelle Verstellung der beiden Schieberanordnungen unabhängig voneinander. Die Möglichkeit, mittels der Fernbedienungsvorrichtungen jede Schieberanordnung in zwei zur Grundöffnungsstellung zusätzliche Öffnungsstellungen zu verstellen, bedeutet, daß der Schleuderstreuer in einfacher und schneller Weise auch in Fahrtrichtung an unterschiedliche Einsatzbedingungen angepaßt werden kann. Die Ausbildung der Schieberanordnungen als Doppelschieberanordnungen beitet den Vorteil, daß die ersten Schieber während des Einsatzes in der Grundöffnungsstellung verbleiben und somit die Grundausbringmenge festlegen und zur Veränderung der Grundausbringmenge lediglich die zweiten Schieber um eine vergleichsweise geringe Wegstrecke verstellt werden. Dadurch wird eine wiederholbar sehr hohe Einstellgenauigkeit der Schieberanordnungen erzielt. Unterstützt wird diese hohe Einstellgenauigkeit dadurch, daß die ersten Schieber und die zweiten Schieber mittels getrennter Bedienungselemente in ihre jeweiligen Stellungen verstellt werden und eine einstellbare Markierungs- und/oder Anschlagseinrichtung zur Festlegung der zusätzlichen Öffnungsstellungen der Schieberanordnungen vorgesehen ist.

Die Markierungs- und/oder Anschlageinrichtung umfasst zwei, je einem Betätigungshebel zugeordnete Anschläge. Die zwei Anschläge können zwecks weiterer Verbesserung der Anpassungsfähigkeit des Schleuderstreuers an unterschiedliche Einsatzbedingungen unabhängig voneinander einstellbar sein.

Gemäß einer Weiterbildung der Erfindung sind die Betätigungshebel und die Anschläge an einem gemeinsamen Betätigungsblock angeordnet. Dieser Betätigungsblock kann an einer Halterung befestigbar sein, die in dem Bereich, aus dem die Schieberanordnungen einsehbar sind, am Schleuderstreuer angeordnet ist. Zusätzlich können die Schieberanordnungen manuell durch Betätigung der Betätigungshebel in ihre Schließstellung gebracht werden. Zu diesem Zweck ist es günstig, die die kleinste Öffnungsweite der Auslauföffnungen festlegenden Anschläge derart auszubilden, daß die Betätigungshebel leicht an diesen Anschlägen vorbeibewegbar sind. Gemäß einer dafür günstigen Konstruktion weisen diese Anschläge je zwei schräge Flächen auf, über die die Betätigungshebel leicht hinwegbewegbar sind.

Zur Erzielung einer einfachen und robusten Einstellmöglichkeit können die zweiten Bedienungselemente als Bowdenzüge ausgebildet sein. Diese Bowdenzüge haben den weiteren Vorteil, daß sie bei Bewegung in einer Richtung praktisch toleranzfrei arbeiten.

Um bei nicht eingerasteten Rastelementen die Bewegung der ersten Schieber von der Schließin die Grundöffnungsstellung und zurück auf den zweiten Schieber übertragen zu können, sind die Bowdenzüge vorteilhafterweise über ihre Hüllen an den ersten Schiebern abgestützt.

Gemäß einer Weiterbildung der Erfindung umfaßt die Anschlageinrichtung für die Festlegung der Grundöffnungsstellung der Schieberanordnungen je ein erstes einstellbares Anschlagelement für die ersten Schieber und je ein zweites einstellbares Anschlagelement für die zweiten Schieber.

Hierbei sind die ersten Anschlagelemente vorzugsweise als Anschlagsbolzen an je einem an den Bodenplatten schwenkbar gelagerten und feststellbaren Anschlaghebel ausgebildet. Dabei ist es günstig, wenn die ersten Schieber in der Grundöffnungsstellung mit je einem Verlängerungsstück an dem Anschlagbolzen anliegen.

Die zweiten Anschlagelemente können als je ein mit den Betätigungshebeln zusammenwirkender Anschlag ausgebildet sein. Bevorzugterweise jedoch sind sie an den ersten Schiebern ausgebildet, wobei sie die Form von V-förmigen Rastkerben annehmen können.

Vorteilhafterweise rasten die zweiten Schieber in der Grundöffnungsstellung mit je einem Rastbolzen in die Rastkerben ein. Dieses Einrasten wird dem Landwirt als ein über die Bowdenzüge zu den Betätigungshebeln übertragener spürbarer Ruck angezeigt.

Die Rastkerben sind vorzugsweise in der Mitte je eines Langloches ausgebildet. Hierbei können die Langlöcher und die Rastbolzen an Verlängerungsstücken der Schieber angeordnet sein.

Gemäß einer Weiterbildung der Erfindung sind die Langlöcher in je einem Kunststoffelement ausgebildet und weisen im Bereich der Rastkerben eine Höhe auf, die kleiner als der Durchmesser der Rastbolzen ist. Bei Betätigung der zweiten Bedienungselemente spürt die Bedienungsperson einen größeren Widerstand im Bereich der Rastkerben, wodurch deren Nähe angezeigt wird.

Vorzugsweise sind den ersten Schiebern und den zweiten Schiebern je eine Einstellskala gleicher Teilung zugeordnet. Der Anschlaghebel kann einen Zeiger aufweisen, dem eine Einstellskala mit linearer Teilung zugeordnet ist.

Anhand einer Zeichnung werden Ausführungsbeispiele der Erfindung nachfolgend erläutert. Hierbei zeigen:

Fig. 1 eine erfindungsgemäßen Anbauschleuderstreuer in der Ansicht von hinten,

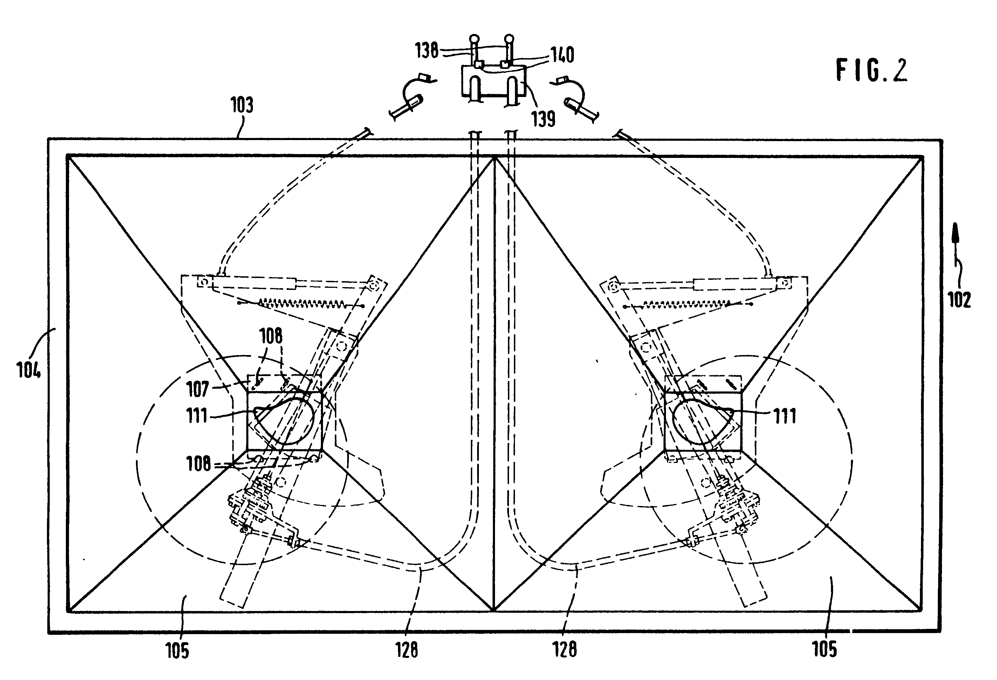

Fig. 2 den Schleuderstreuer aus Fig. 1 in der Draufsicht und in vergrößertem Maßstab,

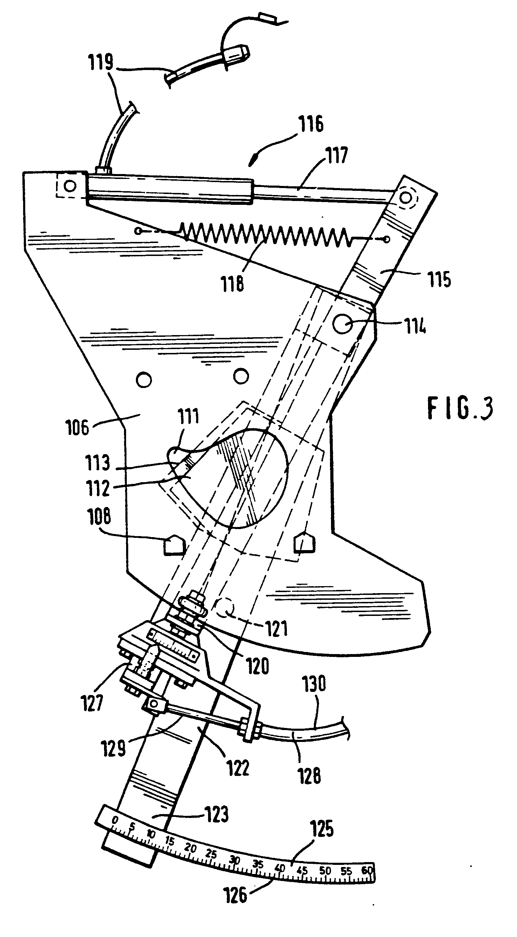

Fig. 3 die linke Dosiereinheit des Schleuderstreuers aus Fig. 2 in vergrößertem Maßstab und in der Draufsicht,

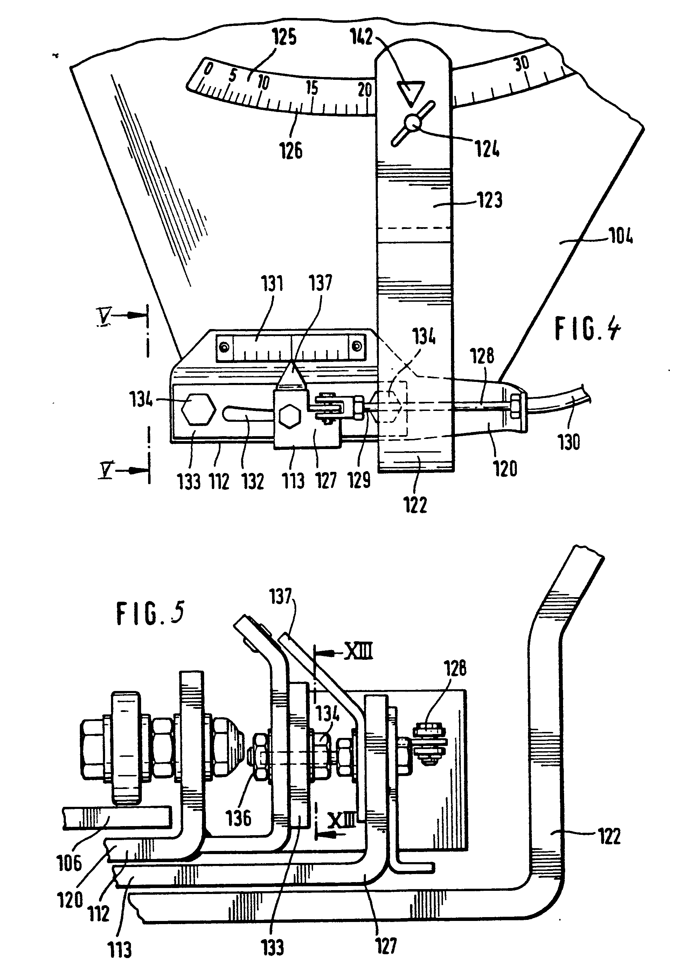

Fig. 4 die Dosiereinheit gemäß Fig. 3—an den Schleuderstreuer angebaut— in der Ansicht von hinten,

Fig. 5 die Anordnung der Schieber in der Ansicht V—V aus Fig. 4,

Fig. 6 das Kunststoffteil eines Rastelementes der Dosiereinheit in der Ansicht von hinten,

Fig. 7 das Rastelement in der Ansicht XIII—XIII, wobei die Schieber sich in Grundstellung befinden,

Fig. 8 das Rastelement ebenfalls in der Ansicht XIII—XIII, wobei ein kleinerer Ausbringungsmengenwert eingestellt ist,

Fig. 9 ein Fernbedienungselement, in Seitenansicht, und

Fig. 10 das Fernbedienungselement gemäß Fig. 9 in der Draufsicht.

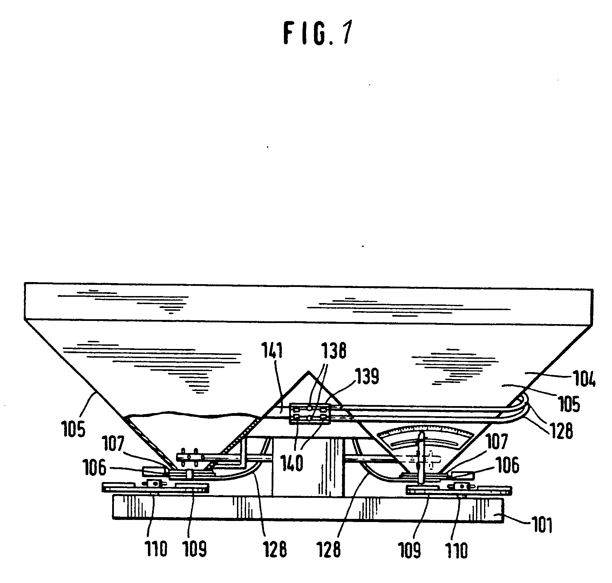

Der Anbauschleuderstreuer gemäß Fig. 1 weist einen Rahmen 101 auf, der auf seiner in Fahrtrichtung 102 vorderen Seite 103 mit nicht dargestellten Kupplungslementen zum Anbau an einen ebenfalls nicht dargestellten Schlepper ausgestattet ist. Ferner ist am Rahmen 101 ein Vorratsbehälter 104 befestigt, der zwei durch ein dachförmiges Mittelteil getrennte trichterförmige Behälterteile 105 aufweist. Die trichterförmigen Behälterteile 105 weisen jeweils eine lösbare Bodenplatte 106 auf, welche an den Behälterteilen 105 angeschweißten Anschlußelementen 107 mit Schnellverschlüssen 108 befestigt sind. Diese Schnellverschlüsse sind als Haken und Schrauben mit Flügelmuttern ausgebildet. Unterhalb jeder Bodenplatte 106 ist ein als Schleuderscheibe 109 ausgebildetes Verteilorgan angeordnet, das über ein Getriebe 110 von der Schlepperzapfwelle angetrieben wird.

Die Bodenplatten 106 sind als Dosierorgane ausgebildet. In jeder Bodenplatte 106 befindet sich jeweils eine Auslauföffnung 111, deren Öffnungsweite durch eine unter der Bodenplatte 106 und vor der Auslauföffnung 111 angordnete Schieberanordnung bestehend aus einem ersten Schieber 112 und einem zweiten Schieber 113 mittels je einer Fernbedienungsvorrichtung eingestellt werden kann. Unterhalb jeder Bodenplatte 106 sind die beiden Schieber 112 und 113 auf einem Bolzen 114 schwenkbar angeordnet. Direkt unter der Bodenplatte 106 befindet sich der erste Schieber 112. Unter dem erste Schieber 112 ist der zweite Schieber 113 angeordnet, so daß sich der erste Schieber 112 zwischen der Bodenplatte 106 und dem zweiten Schieber 113 befindet. Ein Bedienungshebel 115 des Schiebers 112 ragt nach vorn über den Bolzen 114 hinaus. An diesem über den Bolzen 114 hinausragenden Bedienungshebel 115 ist als Teil der jeweiligen Fernbedienungsvorrichtung ein erstes Bedienungselement 116 angeordnet. Dieses Bedienungselement 116 ist als einfach wirkender Hydraulikzylinder 117 und als dem Hydraulikzylinder 117 entgegenwirkende Zugfeder 118 ausgebildet. Der Hydraulikzylinder 117 und die Zugfeder 118 sind an der Bodenplatte 106 befestigt. Der jeweilige Hydraulikzylinder 117 ist über einen Hydraulikschlauch 119 an die Hydraulikanlage des Schleppers angeschlossen und kann über Steuergeräte vom Schleppersitz aus betätigt werden.

Der erste Schieber 112 weist auf seiner dem Bedienungshebel 115 abgewandten Seite das Verlängerungsstück 120 auf. Dieses Verlängerungsstück 120 liegt an einem Anschlagbolzen 121 eines Anschlaghebels 122 an, welcher als erstes einstellbares Anschlagelement einer Anschlageinrichtung ausgebildet ist, welche die Grundöffnungsstellung des Schiebers bestimmt.

Der Anschlaghebel 122 ist ebenfalls auf dem Bolzen 114 schwenkbar gelagert. Der Anschlaghebel 122 weist einen nach oben abgebogenen Teil 123 auf. An dem abgebogenen Teil 123 des Anschlaghebels 122 ist eine Einstellschraube 124 angeordnet, über der der Anschlaghebel 122 an einer dem Vorratsbehälter 104 angeschweißten Schiene 125, auf der sich auch eine Einstellskala 126 befindet, festgeklemmt werden kann. An dem Anschlagbolzen 121 des Anschlaghebels 121 liegt das Verlängerungsstück 120 des ersten Schiebers 112 an, wenn die Schieber sich in ihrer Öffnungsstellung befinden. Die Einstellskala 126 ist für die Grundeinstellung vorgesehen und weist eine lineare Teilung auf. Anhand dieser Einstellskala kann in Verbindung mit den Werten einer Streutabelle das als Anschlaghebel 122 bzw. als Anschlagbolzen 121 ausgebildete erste Anschlagelement eingestellt werden.

Der zweite Schieber 113 besitzt einen Bedienungshebel 127, der sich bis über das Verlängerungsstück 120 des ersten Schiebers 112 hinaus erstreckt. Zwischen dem Bedienungshebel 127 des zweiten Schiebers 113 und dem Verlängerungsstück 120 des ersten Schiebers 112 ist als Teil der Fernbedienungsvorrichtung ein zweites Bedienungselement 128 in Form eines Bowdenzuges 129, 130 als angeordnet. Hierbei ist das Seil 129 an dem Bedienungshebel 127 des zweiten Schiebers 113 befestigt, während die Hülle 130 des Bowdenzuges 128 an dem Verlängerungsstück 120 des Schiebers 112 angeschraubt ist.

An dem Verlängerungsstück 120 des ersten Schiebers 112 ist eine Einstellskala 131 angeordnet. Weiterhin ist in dem aufrechten Stück des Verlängerungsstückes 120 des ersten Schiebers 112 ein Langloch 132 angeordnet. An dem aufrechten Stück des Verlängerungsstückes 120 des Schiebers 112 ist ein Kunststoffteil 133 mit Schrauben 134 befestigt. Das Kunststoffteil 133 weist ebenfalls das Langloch 132 auf. Das Langloch 132 in dem Kunststoffteil 133 weist eine jeweils sich in Richtung der Mitte des Langloches verminderte Breite auf. In der Mitte weist das Langloch 132 auf seiner Unterseite eine V-förmige Rastkerbe 135 als zweites Anschlagelement der die Grundöffnungsstellung der Schieberanordnung bestimmenden Anschlageinrichtung auf. An dem Verlängerungsstück 127 des zweiten Schiebers 113 ist ein Rastbolzen 136 befestigt, der in dem Langloch 132 des Kunststoffteiles 133 hineinragt. Das Langloch 132 des Kunststoffteiles 133 weist in dem Bereich der Rastkerbe 135 eine Höhe auf, die kleiner als der Durchmesser des Rastbolzens 136 ist. Das Kunststoffteil 133 mit dem Langloch 132 bildet in Verbindung mit dem Rastbolzen 136 die Rastelemente, welche die Grundeinstellung der Schieber 112 und 113 zueinander bestimmen, wenn der Rastbolzen 136 sich in der V-förmigen Rastkerbe 135 befindet.

Weiterhin weist das Verlängerungsstück 127 des Schiebers 113 einen Zeiger 137 auf. Dieser Zeiger 137 wirkt mit der Einstellskala 131 zusammen. Diese Einstellskala 131 weist die gleiche Teilung wie die Skala 126 auf, d.h. wenn der Anschlaghebel 122 um einen Teilstrich an der Skala 126 verstellt wird, so entspricht dies der Verstellung, als wen der Schieber 113 um einen Teilstrich gegenüber der Skala 131 verstellt wird.

Der Betätigungshebel 138 der beiden Bowdenzüge 128, wobei jeder Bowdenzug der Dosiereinrichtung einer Schleuderscheibe 109 zugeordnet ist, sind an einem gemeinsamen Betätigungsblock 139 angeordnet. An dem Betätigungsblock 139 sind einstellbare Anschläge 140 angeordnet. An diesen Anschlägen 140 kommen die Betätigungshebel 138 der Bowdenzüge zur Anlage. Diese Anschläge 140 bestimmen die maximale und die minimale Ausbringmenge des Schleuderstreuers. Die Anschläge 140 sind für die beiden Hebel 138 jeweils getrennt und unterschiedlich einstellbar.

Auf der Rückseite des Vorratsbehälters 104 ist an dem Vorratsbehälter 104 eine Halterung 141 angebracht, in die der Betätigungsblock zum Einstellen der maximalen und minimalen Ausbringmenge zu befestigen ist. Hierzu wird der Betätigungsblock 139 in die Halterung 141 eingesteckt. Die Halterung 141 ist somit in einem Bereich angeordnet, aus dem die Schieber 112 und 113 bzw. die Skala 131 und der Zeiger 137 jeweils einsehbar sind. Während des Ausbringens des Düngers auf dem Feld wird der Betätigungsblock 139 auf dem nicht dargestellten Schlepper angeordnet. Weiterhin weist der Betätigungsblock 139 noch Markierungen auf, auf denen die Grundeinstellung sowie die Richtungen angegeben sind, in der die Hebel bewegt werden müssen, wenn eine kleinere oder eine größere Ausbringmenge eingestellt werden soll.

Im folgenden wird die Veränderung der Ausbringmenge pro Flächeneinheit während des Ausbringvorganges sowie das Einstellen eines maximalen und minimalen Ausbringmengenwertes gegenüber einer Grundeinstellung geschildert:

Zunächst stellt der Landwirt anhand der Streutabelle den Anschlaghebel 122 so ein, daß der Zeiger 142 des Anschlaghebels auf den aus der Streutabelle entnommenen Wert der Skala 126 zeigt. In der eingezeichneten Stellung befinden sich die Schieber 112 und 113 in Betriebsstellung; d.h. in Öffnungsstellung. In dieser beispielhaft eingezeichneten Stellung wird nur ein relativ kleiner Querschnitt der Auslauföffnung 111 freigegeben, so daß eine relativ kleine Ausbringmenge ausgebracht wird. In der Öffnungsstellung liegt der Bedienungshebel 120 des ersten Schiebers 112 an dem Anschlagbolzen 121 des Anschlaghebels 122 an. Über den Hydraulikzylinder 117 werden die Schieber 112 und 113 betätigt. Wenn der Hydraulikzylinder 117, wie in dem hier dargestellten Fall drucklos geschaltet ist, zieht die Feder 118 die beiden Schieber 112 und 113 in ihre (eingezeichnete) Öffnungsstellung. Wenn nun der Hydraulikzylinder 117 mit Druck beaufschlagt wird, so wird die Auslauföffnung geschlossen, indem die Schieber in ihre Schließstellung bewegt werden und die Auslauföffnung abdekken. In der Öffnungsstellung liegt das Verlängerungsstück 120 des ersten Schiebers 112, wie oben beschrieben, an dem Anschlagbolzen 121 an.

Um nun anhand von dieser Grundeinstellung die maximale bzw. minimale Ausbringmenge über den zweiten Schieber 113 verändern zu können und genau einzustellen, wird der Betätigungsblock 139 der Bowdenzüge 128 in die Halterung 141 an der Rückseite des Vorratsbehälters 104 eingesteckt. Anhand der Streutabell ermittelt der Landwirt, um wieviel Teilstriche der zweiten Schieber 113 gegenüber dem Schieber 112 verstellt werden muß, um ausgehend von der Grundeinstellung die maximale und die minimale Ausbringmenge einstellen zu können. Entsprechend der Differenz von Teilstrichen zwischen der Grundeinstellung und der maximalen und der minimalen Ausbringmenge bewegt der Landwirt über den jeweiligen Betätigungshebel 138 des jeweiligen Bowdenzuges 128 den Schieber 113 solange in Richtung größerer bzw. kleinerer Ausbringmenge, bis die Differenz an Teilstrichen erreicht ist; dieses wird über die Skala 131 in Verbindung mit dem Zeiger 137 eingestellt. Wenn der zweiten Schieber 113 über den entsprechenden Betätigungshebel 138 des Bowdenzuges 128 soweit gegenüber dem ersten Schieber 112 verschoben worden ist, daß die maximale bzw. minimale Ausbringmenge gegenüber der Grundeinstellung des ersten Schiebers 112 erreicht ist, wird diese Stellung des Betätigungshebels 138 jeweils durch den entsprechenden einstellbaren Anschlag 140 festgelegt. Durch diese Art der Einstellung des zweiten Schiebers 113, daß das Ablesen der Einstellung direkt am Schieber erfolgt und daß die jeweiligen zweiten Schieber 113 von dem jeweiligen Bowdenzug 128 immer aus der gleichen Richtung in die maximale Grundeinstellung bewegt werden, wirkt sich das evtl. im Bowdenzug und in den Verbindungsteilen zwischen dem zweiten Schieber 113 und dem Betätigungshebel vorhandene Spiel nicht aus. Vielmehr wird es durch diese entsprechende Einstellung ausgeschaltet.

Wenn der Landwirt nun für die beiden Dosierorgane jeweils getrennt und unabhängig voneinander über die Betätigungshebel 138 der Bowdenzüge 128 die jeweilige maximale und minimale Ausbringmenge ausgehend von der Grundausbringmenge eingestellt hat, kann mit dem Ausbringen des Düngers begonnen werden. Um nun vom Schlepper aus jeweils die maximale und minimale Ausbringmenge in bezug auf die Grundeinstellung vom Schleppersitz aus verstellen zu können, wird der Betätigungsblock aus der Halterung 141 herausgenommen und auf dem Schlepper angeordnet

Dadurch, daß in der Grundeinstellung der beiden Schieber 112 und 113 zueinander der Rastbolzen 136 jeweils in die V-förmige Rastkerbe 135 einrastet, was beim Bewegen des jeweiligen Betätigungshebels 138 merklich zu spüren ist, kann der jeweilige zweiten Schieber 113 sicher in die Grundeinstellung zurückgestellt werden.

Die beiden zweiten Schieber 113, die jeweils einer Schleuderscheibe 109 zugeordnet sind, können über die Betätigungshebel 138 der Bowdenzüge 128 jeweils unabhängig voneinander vom Schleppersitz aus verstellt werden, so daß für jede Schleuderscheibe 109 verschieden große Ausbringmengen pro Flächeneinheit einzustellen sind. Hierzu werden die Schieber 113 gegenüber den ersten Schiebern 112 über die Bowdenzüge 128 derart hin- und herbewegt, daß ausgehend von der Grundeinstellung der Schieber 112 und 113 jeweils ein größerer und ein kleinerer Öffnungsquerschnitt der Auslauföffnung 111 bezüglich der Grundöffnungsweite eingestellt wird. Dadurch, daß die beiden zweiten Schieber 113 jeweils unabhängig über die Betätigungshebel 138 der Bowdenzüge 128 verstellt werden können, ist es beispielsweise möglich, daß für die rechte Schleuderscheibe 109 die maximale Ausbringmenge pro Flächeneinheit und für die linke Schleuderscheibe die minimale Ausbringmenge pro Flächeneinheit einstellbar ist. Es ist auch möglich, daß für die eine Schleuderscheibe 109 die Grundausbringmenge eingestellt wird und für die andere Schleuderscheibe 109 die maximale bzw. minimale Ausbringmenge pro Flächeneinheit eingestellt wird.

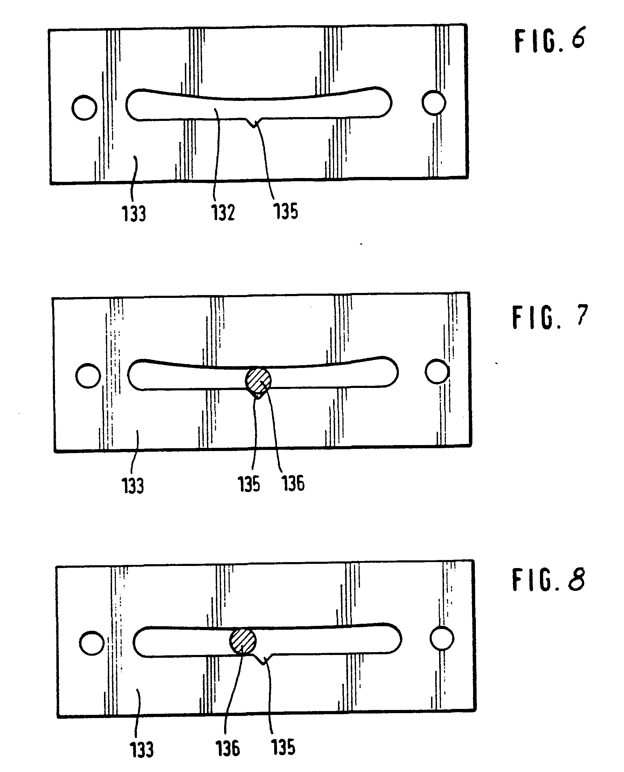

In der Grundeinstellung der Schieber 112 und 113 zueinander befindet sich der Rastbolzen 136 in der V-förmigen Rastkerbe 135 gemäß Fig. 7. Dadurch, daß das Langloch 132 im Bereich der V-förmigen Rastkerbe 135 eine geringere Höhe als der Durchmesser des Rastbolzens 136 aufweist, wird der Rastbolzen 136 durch die Elastizität des Kunststoffteiles 133 in die V-förmige Kerbe 135 gedrückt. Wird nun der zweiten Schieber 113 gegenüber dem ersten Schieber 112 verstellt, so wird der Rastbolzen 136 aus der V-förmigen Kerbe 135 herausgedrückt und gleichzeitig wird der obere Teil des Kunststoffteiles oberhalb des Langloches 132 nach oben gedrückt, so daß das Kunststoffteil 133 elastisch verformt wird, wie dieses in Fig. 8 dargestellt ist.

Auf dem Acker werden am Feldende die Auslauföffnungen 111 dadurch geöffnet, daß die Hydraulikzylinder 17 über die auf dem Schlepper befindlichen Steuergeräte drucklos geschaltet werden. Schlagartig ziehen die Zugfedern 118 die jeweiligen Schieber 112 und 113 in ihre eingestellte Öffnungsstellung, so daß das Verlängerungsstück 120 an dem Anschlagbolzen 121 des Anschlaghebels 122 anliegt. Wenn der Landwirt nun während der Feldüberfahrt und des Ausbringvorganges aufgrund der vorliegenden Einsatzverhältnisse eine etwas kleinere oder größere Ausbringmenge ausbringen will, so betätigt er den entsprechenden Betätigungshebel 138 des Bowdenzuges 128.

Über diesen Bowdenzug 128 wird dann der zweiten Schieber 113 gegenüber dem jeweiligen Schieber 112 bewegt, so daß entsprechend der Verstellung des Betätigungshebels 138 ein kleinerer oder ein größerer Öffnungsquerschnitt gegenüber der Grundeinstellung eingestellt wird. Soll anschließend wieder die eingestellte Grundausbringmenge ausgebracht werden, so bewegt der Landwirt den entsprechenden Betätigungshebel 138 wieder zurück, bis er spürbar am Betätigungshebel merkt, daß der Rastbolzen 136 in die V-förmige Rastkerbe 135 eingerastet ist. Somit ist also der durch den zweiten Schieber 113 freigegebene Öffnungsquerschnitt der Auslauföffnung 111 während des Einsatzes des Streuers über den Bowdenzug 128 derart veränderbar, daß jeweils unabhängig voneinander für jede Schleuderscheibe 109 getrennt eine kleinere oder größere Ausbringmenge (Öffnungsweite der Auslauföffnung) unabhängig voneinander einstellbar ist.

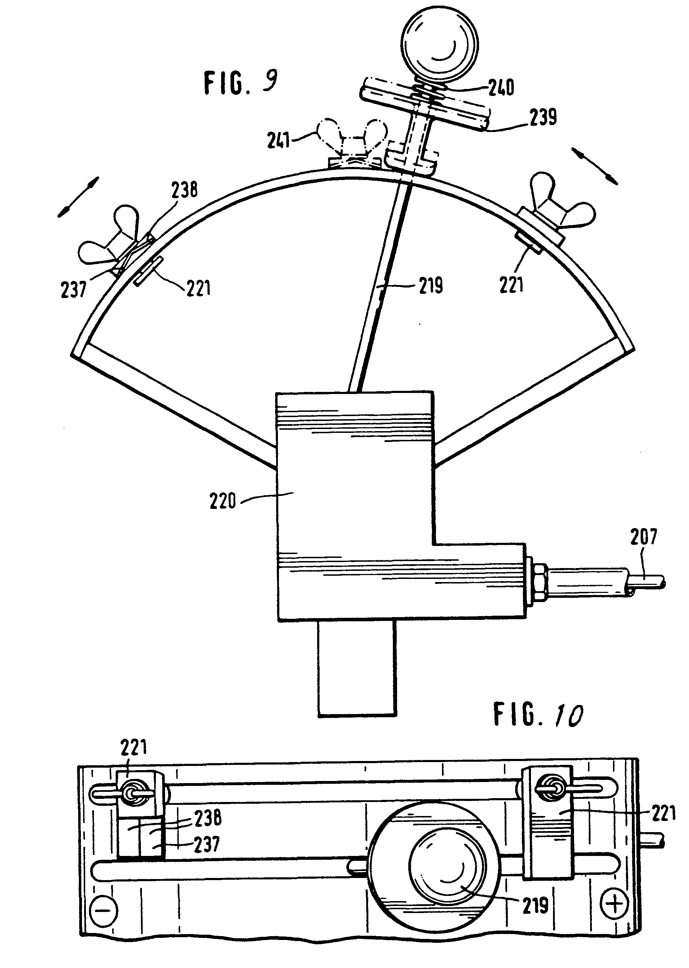

Die Fig. 9 zeigt einen weiteren Betätigungsblock 220, der einen die minimale Ausbringmenge bestimmenden Anschlag 237 mit zwei schrägen Flächen 238 aufweist, über den die Betätigungshebel 219 leicht hinawegbewegbar sind. Die Hebel 219 weisen jeweils nachgebende Elemente 239 auf, die gegen die Federkraft der Federr 240 ausweichen können, wodurch der Betätigungshebel 219 zum Schließen des Schiebers einer Bodenplatte 106 über diesen Anschlag 237 hinweggehoben werden kann. Beim Hinübergleiten über den Anschlag 237 nimmt das Element 239 die mit strichpunktierten Linien dargestellte Stellung ein.

Mit in die Erfindung eingeschlossen werden soll, daß an dem Betätigungsblock 220 eine Einstellskala angeordnet werden kann, so daß die Grundeinstellung vor Beginn der Streuarbeit auch vom Schlepper aus möglich ist.

Des weiteren kann erfindungsgemäß vorgesehen sein, daß an dem Betätigungsblock 220 bzw. an der Skala zwischen den beiden Anschlägen 221 und 237 ein mit strichpunktierten Linien dargestellter dritter Anschlag 241 einstellbar angeordnet. Dieser Anschlag 241 zeigt die Normalausbringmenge an. Auch über diesen Anschlag 241 kann das Element 239 durch Anheben hinweggleiten, so daß der Betätigungshebel 219 an diesem Anschlag vorbeizubewegen ist. Somit markieren bzw. bestimmen die Anschläge 237, 241 und 221 die minimale Ausbringmenge, die normale Ausbringmenge und die maximale Ausbringmenge.

## Patentansprüche

1. Schleuderstreuer, vorzugsweise Anbauschleuderstreuer, insbesondere für gekörnte Düngemittel, mit einem Vorratsbehälter (104) und einer Verteileinrichtung mit zumindest zwei angetriebenen Verteilorganen (109), denen die auszubringenden Materialen über zumindest je eine mit einer Schieberanordnung (112, 113) verschließbare und auf verschiedene Öffnungsweiten einstellbare Auslauföffnung (111) zuführbar sind, wobei die Schieberanordnungen (112, 113) mit Hilfe einer Fernbedienung in die Schließstellung und in Öffnungsstellungen bringbar sind, welche durch eine am Rahmen des Schleuderstreuers mechanisch einstellbare Anschlageinrichtung derart festlegbar sind, daß sie beliebig oft fehlerlos durch die Schieberanordnungen (112, 113) einnehmbar sind, dadurch gekennzeichnet, daß die Fernbedienung zwei vom Schleppersitz aus betätigbare Fernbedienungsvorrichtungen (116) und (128, 138) oder (207, 219) zum Verstellen und Einstellen der Schieberanordnung (112, 113) des einen Verteilorgans (109) unabhängig von der Schieberanordnung (112, 113) des jeweils anderen Verteilorgans (109) umfaßt, daß die Fernbedienungsvorrichtungen (116) und (128, 138 oder 207, 219) je ein erstes Bedienungselement (116) zur Verstellung der gesamten Schieberanordnung (112, 113) in die Schließ- und in eine Grundöffnungsstellung umfaßt, daß jede Schieberanordnung (112, 113) als Doppelschieberanordnung mit einem ersten Schieber (112) und einem zweiten Schieber (113), die beide zum Verstellen der Öffnungsweite der Auslauföffnungen (111) zusammenwirken, daß er ein zweites Bedienungselement (128, 207) mit einem Betätigungshebel (138, 219) zum Verstellen des zweiten Schiebers (113) gegenüber des ersten Schiebers (112) umfaßt und so zwei zusätzliche Öffnungsstellungen ermöglicht, wobei die Öffnungsweiten der Auslauföffnungen (111) in der einen zusätzlichen Öffnungsstellung größer und in der anderen kleiner als in der Grundöffnungsstellung sind, und eine einstellbare Markierungs- und/oder Anschlageinrichtung (140, 221, 237) zur Festlegung der zusätzlichen Öffnungsstellungen des zweiten Schiebers (113) gegenüber des ersten Schiebers (112) umfaßt, wobei die Markierungs-und/oder Anschlageinrichtung zwei, je einem Betätigungshebel (138, 219) zugeordnete Anschläge (140, 221, 237) umfaßt.

2. Schleuderstreuer nach Anspruch 1, dadurch gekennzeichnet, daß die Anschläge (140, 221, 237) unabhängig voneinander einstellbar sind.

3. Schleuderstreuer nach Anspruch 1 oder 2, dadurch gekennzeichnet, daß die Betätigungshebel (138, 219) und die Anschläge (140, 221, 237) an einem gemeinsamen Betätigungsblock (139, 220) angeordnet sind.

4. Schleuderstreuer nach Anspruch 3, dadurch gekennzeichnet, daß der Betätigungsblock (139, 220) an einer Halterung (141) befestigbar ist, die in dem Bereich, aus dem die Schieberanordnungen (112, 113) einsehbar sind, am Schleuderstreuer angeordnet ist.

5. Schleuderstreuer nach wenigstens einem der Ansprüche 1 bis 4, dadurch gekennzeichnet, daß die die kleinste Öffnungsweite der Auslauföffnungen (111) festlegenden Anschläge (237) derart ausgebildet sind, daß die Betätigungshebel (219) zur Verstellung bis in die Schließstellung der Schieberanordnungen (112, 113) leicht an diesen Anschlägen (237) vorbeibewegbar sind.

6. Schleuderstreuer nach Anspruch 5, dadurch gekennzeichnet, daß die die kleinste Öffnungsweite der Auslauföffnungen (111) festlegenden Anschläge (237) je zwei schräge Flächen (238) aufweisen, über die die Betätigungshebel (219) leicht hinwegbewegbar sind.

7. Schleuderstreuer nach wenigstens einem der Ansprüche 1 bis 6, dadurch gekennzeichnet, daß die zweiten Bedienungselemente (128, 207) als Bowdenzüge (128, 129, 130) ausgebildet sind.

8. Schleuderstreuer nach Anspruch 7, dadurch gekennzeichnet, daß die Bowdenzüge (128, 129, 130) über ihre Hüllen (130) an den ersten Schiebern (112) abgestützt sind.

9. Schleuderstreuer nach wenigstens einem der Ansprüche 1 bis 8, dadurch gekennzeichnet, daß die Anschlageinrichtung für die Festlegung der Grundöffnungsstellung der Schieberanordnungen (112, 113) je ein erstes einstellbares Anschlagelement (121) für die ersten Schieber (112) und je ein zweites einstellbares Anschlagelement (135, 241) für die zweiten Schieber (113) umfaßt.

10. Schleuderstreuer nach Anspruch 9, dadurch gekennzeichnet, daß die ersten Anschlagelement (121) als Anschlagbolzen (121) an je einem an den Bodenplatten (106) schwenkbar gelagerten und feststellbaren Anschlaghebel (122) ausgebildet sind.

11. Schleuderstreuer nach Anspruch 10, dadurch gekennzeichnet, daß in der Grundöffnungsstellung die ersten Schieber (112) mit je einem Verlängerungsstück (120) an den Anschlagbolzen (121) anliegen.

12. Schleuderstreuer nach wenigstens einem der Ansprüche 9 bis 11, dadurch gekennzeichnet, daß die zweiten Anschlagelemente (241) als je ein mit den Betätigungshebeln (219) zusammenwirkender Anschlag (241) ausgebildet sind.

13. Schleuderstreuer nach wenigstens einem der Ansprüche 9 bis 11, dadurch gekennzeichnet, daß die zweiten Anschlagelemente (135) an den ersten Schiebern (112) ausgebildet sind.

14. Schleuderstreuer nach Anspruch 9 oder 13, dadurch gekennzeichnet, daß die zweiten Anschlagelemente (135) als V-förmige Rastkerben (135) ausgebildet sind.

15. Schleuderstreuer nach Anspruch 14, dadurch gekennzeichnet, daß in der Grundöffnungsstellung die zweiten Schieber (113) mit je einem Rastbolzen (136) in die Rastkerben (135) eingerastet sind.

16. Schleuderstreuer nach Anspruch 14 oder 15, dadurch gekennzeichnet, daß die Rastkerben (135) in der Mitte eines Langloches (132) ausgebildet sind.

17. Schleuderstreuer nach Anspruch 16, dadurch gekennzeichnet, daß die Langlöcher (132) und die Rastbolzen (136) an Verlängerungsstücken (120, 127) der Schieber (112, 113) angeordnet sind.

18. Schleuderstreuer nach Anspruch 16 oder 17, dadurch gekennzeichnet, daß die Langlöcher (132) in je einem Kunststoffelement (133) ausgebildet sind und im Bereich der Rastkerben (135) eine Höhe aufweisen, die kleiner als der Durchmesser der Rastbolzen (136) ist.

19. Schleuderstreuer nach wenigstens einem der Ansprüche 1 bis 18, dadurch gekennzeichnet, daß den ersten Schiebern (112) und den zweiten Schiebern (113) je eine Einstellskala (131) gleicher Teilung zugeordnet ist.

20. Schleuderstreuer nach wenigstens einem der Ansprüche 16 bis 19, dadurch gekennzeichnet, daß der Anschlaghebel (122) einen Zeiger aufweist, dem eine Einstellskala (126) mit linearer Teilung zugeordnet ist.

**Revendications**

1. Epandeur centrifuge en particulier épandeur porté, notamment pour des engrais en forme de granulés, comportant un réservoir d'alimentation (104) et une installation de distribution avec au moins deux organes distributeurs (109), entraînés, qui reçoivent les produits à distribuer par l'intermédiaire d'au moins un orifice de sortie (111) susceptible d'être fermé et ouvert sur différentes dimensions d'ouverture par chaque fois un dispositif à tiroirs (112, 113), le dispositif à tiroirs (112, 113) pouvant être mis en position de fermeture et en position d'ouverture par télécommande, ces positions se fixant à l'aide d'une installation à butée réglable mécaniquement prévue sur le châssis de l'épandeur de façon à ce que ces positions puissent être occupées un nombre quelconque de fois, sans erreur par les dispositifs à tiroirs (112, 113), épandeur caractérisé en ce que le moyen de télécommande se compose de deux dispositifs de télécommande (116) et (128, 138) ou (207, 219) pouvant être actionnés à partir du siège du conducteur pour déplacer et régler le dispositif à tiroirs (112, 113) d'un organe de répartition (109) indépendamment du dispositif à tiroirs (112, 113) de l'autre organe de répartition (109), les dispositifs de télécommande (116) et (128, 138 ou 207, 219) comportent chacun un premier élément de manoeuvre (116) pour régler l'ensemble du dispositif à tiroirs (112, 113) en position de fermeture et dans une position d'ouverture de base, chaque dispositif à tiroirs (112, 113) coopérant comme dispositif à double tiroir avec un premier tiroir (112) et un second tiroir (113) ces deux tiroirs coopérant pour régler la largeur d'ouverture des orifices de sortie (111), épandeur comportant un second élément de manoeuvre (128, 207) avec un levier de manoeuvre (138, 219) pour régler le second tiroir (113) par rapport au premier tiroir (112) permettant deux positions d'ouverture supplémentaires, les largeurs des ouvertures des orifices de sortie (111) étant plus grandes dans l'une des positions d'ouverture et plus petites dans l'autre par rapport à l'ouverture du réglage de base ainsi qu'une installation de repérage et/ou de butée réglable (140, 221, 237) pour définir les positions d'ouverture supplémentaires du second tiroir (113) par rapport au premier tiroir (112), cette installation de repérage et/ou de butée comportant deux butées (140, 221, 327) associées respectivement à chaque levier de manoeuvre (138, 219).

2. Epandeur centrifuge selon la revendication 1, caractérisé en ce que les butées (140, 221, 237) de règlent indépendamment l'une de l'autre.

3. Epandeur centrifuge selon la revendication 1 ou 2, caractérisé en ce que les leviers de manoeuvre (138, 219) et les butées (140, 221, 237) sont prévus sur un bloc de manoeuvre (139, 220) commun.

4. Epandeur centrifuge selon la revendication 3, caractérisé en ce que le bloc de manoeuvre (139, 220) se fixe sur un support (141) prévu sur l'épandeur centrifuge à un endroit permettant de voir les dispositifs à tiroirs (112, 113).

5. Epandeur centrifuge selon au moins l'une des revendications 1 à 4, caractérisé en ce que les butées (237) qui fixent la plus petite largeur d'ouverture des orifices de sortie (111) sont telles que le levier de manoeuvre (219) puisse passer facilement sur ces butées (237) pour le réglage jusqu'en position de fermeture des dispositifs à tiroirs (112, 113).

6. Epandeur centrifuge selon la revendication 5, caractérisé en ce que les butées (237) qui fixent la plus petite largeur d'ouverture des orifices de sortie (111) comportent chacune deux surfaces inclinées (238) par-dessus lesquelles les leviers de manoeuvre (219) peuvent passer facilement.

7. Distributeur centrifuge selon au moins l'une des revendications 1 à 6, caractérisé en ce que les seconds éléments de manoeuvre (128, 207) sont des câbles Bowden (128, 129, 130).

8. Epandeur centrifuge selon la revendication 7, caractérisé en ce que les gaines (130) des câbles Bowden (128, 129, 130) s'appuient contre les premiers tiroirs (112).

9. Epandeur centrifuge selon au moins l'une des revendications 1 à 8, caractérisé en ce que l'installation de butée comporte pour fixer la position d'ouverture de base des dispositifs à tiroirs (112, 113), chaque fois un premier élément de butée réglable (121) pour le premier tiroir (112) et un second élément de butée réglable (135, 241) pour le second tiroir (113).

10. Epandeur centrifuge selon la revendication 9, caractérisé en ce que les premiers éléments de butée (121) sont des goujons de butée (121) portant chacun un levier de butée (122) monté sur chaque plaque de fond (106) et susceptible d'être bloqué ainsi.

11. Epandeur centrifuge selon la revendication 10, caractérisé en ce qu'en position d'ouverture de base, les premiers tiroirs (112) s'appliquent contre les goujons de butée (121) par chaque fois une pièce de prolongement (120).

12. Epandeur centrifuge selon au moins l'une des revendications 9 à 11, caractérisé en ce que les seconds éléments de butée (241) sont réalisés comme butées (241) coopérant chaque fois avec l'un des leviers de manoeuvre (219).

13. Epandeur centrifuge selon au moins l'une des revendications 9 à 11, caractérisé en ce que les seconds éléments de butée (135) sont réalisés sur les premiers tiroirs (112).

14. Epandeur centrifuge selon la revendication 9 ou 13, caractérisé en ce que les seconds éléments de butée (135) sont des encoches d'encliquetage (135) en forme de V.

15. Epandeur centrifuge selon la revendication 14, caractérisé en ce qu'en position d'ouverture de base, les seconds tiroirs (113) ont chaque fois un goujon d'encliquetage (136) accroché dans l'encoche d'encliquetage (135).

16. Epandeur centrifuge selon la revendication 14 ou 15, caractérisé en ce que les encoches d'encliquetage (135) sont réalisées au milieu d'un trou oblong (132).

17. Epandeur centrifuge selon la revendication 16, caractérisé en ce que les trous oblongs (132) et les goujons d'encliquetage (136) sont prévus sur les pièces de prolongement (120, 127) des tiroirs (112, 113).

18. Epandeur centrifuge selon la revendication 16 ou 17, caractérisé en ce que les trous oblongs (132) sont réalisés chaque fois dans un élément en matière synthétique (133) et au niveau des encoches d'encliquetage (135) ils ont une hauteur inférieure au diamètre du goujon d'encliquetage (136).

19. Epandeur centrifuge selon au moins l'une des revendications 1 à 18, caractérisé en ce que chaque fois une échelle de réglage (131) à même graduation est associée aux premiers tiroirs (112) et aux seconds tiroirs (113).

20. Epandeur centrifuge selon au moins l'une des revendications 16 à 19, caractérisé en ce que le levier de butée (122) comporte un index associé à une échelle de graduation (126) à graduation linéaire.

**Claims**

1. Centrifugal distributor, preferably an attachable centrifugal distributor, more especially for granular fertilizers, including a hopper (104) and a distribution arrangement provided with at least two driven distributing members (109), to which the materials to be dispensed are suppliable via at least one respective outlet aperture (111), which is closable by means of a slider arrangement (112, 113) and is settable to various widths of opening, the slider arrangements (112, 113) being introduceable into their closed position and into their open positions by a remote-control means, which positions are so determinable by means of a stop arrangement, which is mechanically settable on the frame of the centrifugal distributor, that they are often accurately assumable as desired by the slider arrangements (112, 113), characterised in that the remote-control means includes two remote-control devices (116 and 128, 138 or 207, 219), which are actuatable from the tractor seat, for adjusting and setting the slider arrangement (112, 113) of one distributing member (109) independently of the slider arrangement (112, 113) of the other respective distributing member (109); the remote-control devices (116 and 128, 138 or 207, 219) each include a first control member (116) for adjusting the entire slider arrangement (112, 113) into the closed position and into a basic open position; each slider arrangement (112, 113) is in the form of a double slider arrangement, having a first slider (112) and a second slider (113) which both co-operate to adjust the width of opening of the outlet apertures (111); it includes a second control member (128, 207) with an actuating lever (138, 219) for adjusting the second slider (113) relative to the first slider (112) and thus permits two additional open positions, the widths of opening of the outlet apertures (111) in one additional open position being greater than in the basic open position and, in the other open position, being smaller than in the basic open position; and it includes a settable marking and/or stop arrangement (140, 221, 237) for determining the additional open positions of the second slider (113) relative to the first slider (112), the marking and/or stop arrangement including two stop members (140, 221, 237), which are each associated with one respective actuating lever (138, 219).

2. Centrifugal distributor according to claim 1, characterised in that the stop members (140, 221, 237) are settable independently of one another.

3. Centrifugal distributor according to claim 1 or 2, characterised in that the actuating levers (138, 219) and the stop members (140, 221, 237) are disposed on a common actuating block (139, 220).

4. Centrifugal distributor according to claim 3, characterised in that the actuating block (139, 220) is mountable on a mounting support (141), which is disposed on the centrifugal distributor in the region from which the slider arrangements (112, 113) can be inspected.

5. Centrifugal distributor according to at least one of claims 1 to 4, characterised in that the stop members (237), which determine the minimum width of opening of the outlet apertures (111), are so adapted that the actuating levers (219) are easily displaceable past these stop members (237) for adjustment into the closed position of the slider arrangements (112, 113).

6. Centrifugal distributor according to claim 5, characterised in that the stop members (237), which determine the minimum width of opening of the outlet apertures (111), each have two inclined faces (238), beyond which the actuating levers (219) are easily displaceable.

7. Centrifugal distributor according to at least one of claims 1 to 6, characterised in that the second control members (128, 207) are Bowden cables (128, 129, 130).

8. Centrifugal distributor according to claim 7, characterised in that the Bowden cables (128, 129, 130) are supported on the first sliders (112) by means of their sheaths (130).

9. Centrifugal distributor according to at least one of claims 1 to 8, characterised in that the stop arrangement for determining the basic open position of the slider arrangements (112, 113) includes a first settable stop element (121) for the first sliders (112) and a second settable stop element (135, 241) for the second sliders (113).

10. Centrifugal distributor according to claim 9, characterised in that the first stop elements (121) are stop pins (121) on each respective stop lever (122), which is pivotably mounted and securable on the base plates (106).

11. Centrifugal distributor according to claim 10, characterised in that, in the basic open position, the first sliders (112) each abut against the stop pins (121) by means of a respective extension piece (120).

12. Centrifugal distributor according to at least one of claims 9 to 11, characterised in that the second stop elements (241) are each a stop member (241) which cooperates with the actuating levers (219).

13. Centrifugal distributor according to at least one of claims 9 to 11, characterised in that the second stop elements (135) are provided on the first sliders (112).

14. Centrifugal distributor according to claim 9 or 13, characterised in that the second stop elements (135) are provided as V-shaped locking notches (135).

15. Centrifugal distributor according to claim 14, characterised in that, in the basic open position, the second sliders (113) are each locked in position in the locking notches (135) by means of a respective locking pin (136).

16. Centrifugal distributor according to claim 14 or 15, characterised in that the locking notches (135) are provided in the centre of an elongate slot (132).

17. Centrifugal distributor according to claim 16, characterised in that the elongate slots (132) and the locking pins (136) are disposed on extension pieces (120, 127) of the sliders (112, 113).

18. Centrifugal distributor according to claim 16 or 17, characterised in that the elongate slots (132) are provided in each respective plastics material portion (133) and have a height, in the region of the locking notches (135), which is smaller than the diameter of the locking pins (136).

19. Centrifugal distributor according to at least one of claims 1 to 18, characterised in that a graduated scale (131) of identical graduation is associated with each of the first sliders (112) and each of the second sliders (113).

20. Centrifugal distributor according to at least one of claims 16 to 19, characterised in that the stop lever (122) has an indicator, with which a graduated scale (126) with linear graduation is associated.

FIG. 1

FIG.2

FIG.3

FIG.4

FIG.5

4

FIG. 6

133     132   135

FIG. 7

133     135   136

FIG. 8

133     136   135

FIG. 9

FIG. 10